# EUROPÄISCHE PATENTSCHRIFT

(11) **EP 0 929 927 B1**
(45) Veröffentlichungstag und Bekanntmachung des Hinweises auf die Patenterteilung: **24.03.2010**
(21) Anmeldenummer: 98933554.2
(22) Anmeldetag: 16.05.1998
(51) Int. Cl.: H02J 7/14

(54) **VERFAHREN ZUR REGELUNG EINES GENERATORS**
METHOD FOR REGULATING A GENERATOR
PROCEDE POUR REGULER UN GENERATEUR

(30) Priorität: 01.08.1997 DE 19733221
(43) Veröffentlichungstag der Anmeldung: 21.07.1999
(73) Patentinhaber: ROBERT BOSCH GMBH, 70442 Stuttgart (DE)
(72) Erfinder: MÜLLER, Wolfgang, D-70439 Stuttgart (DE); DITTMER, Bernd, D-71640 Ludwigsburg (DE); SCHÖTTLE, Richard, D-75248 Oelbronn (DE); LUZ, Oliver, D-73732 Esslingen (DE)
(86) Internationale Anmeldenummer: PCT/DE1998/001369
(87) Internationale Veröffentlichungsnummer: WO 1999/007056

(56) Entgegenhaltungen:
- EP-A- 0 593 299
- EP-A1- 0 462 503
- DE-A1- 4 141 837
- US-A- 4 604 528
- G. HENNEBERGER: 'Bosch: Elektrische Motorausrüstung', VIEWEG * Seite 55 *

## Beschreibung

Die Erfindung geht aus von einem Verfahren zur Regelung eines Generators, beispielsweise eines von einer Brennkraftmaschine antreibbaren Drehstromgenerators in einem Kraftfahrzeug, nach der Gattung des Hauptanspruchs.

### Stand der Technik

Zur Erzeugung der im Kraftfahrzeug benötigten elektrischen Energie werden heute üblicherweise Klauenpolgeneratoren eingesetzt. Diese Klauenpolgeneratoren sind Drehstromgeneratoren, deren Ausgangsstrom mit Hilfe einer Diodenbrücke gleichgerichtet wird und zur Versorgung der elektrischen Verbraucher des Fahrzeugs sowie zur Ladung der Batterie verwendet wird.

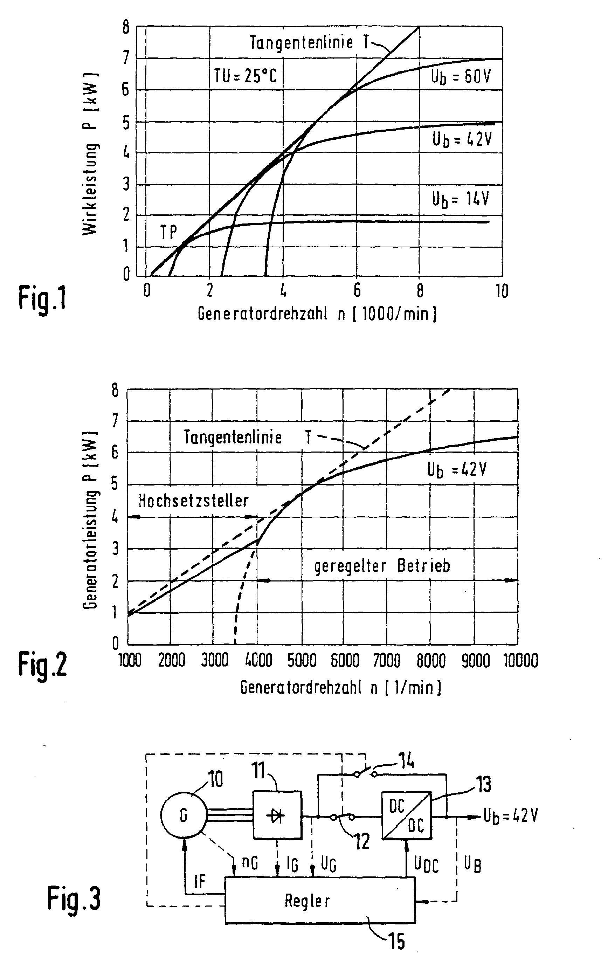

Ein solcher Drehstromgenerator umfaßt eine Feldspule, die vom Feldstrom durchflossen wird. Der Feldstrom wird mit Hilfe eines Spannungsreglers so geregelt, daß die Ausgangsspannung des Generators unabhängig von der Drehzahl des Generators etwa konstant ist. Bekanntermaßen wird in den Statorwicklungen des Generators eine drehzahlabhängige Spannung induziert, die einen Strom durch die Gleichrichterbrücke treibt. Der Ausgangsstrom des Generators ergibt zusammen mit der Generatorspannung die vom Generator gelieferte Leistung. In Figur 1 ist die Generatorleistung P[kW] eines Klauenpolgenerators mit UGN=14V über der Generatordrehzahl n [1/min] bei unterschiedlichen Ausgangsspannungen Ub aufgetragen. Die maximale Abgabeleistung in Abhängigkeit von der Generatordrehzahl verläuft entlang der Tangentenlinie T. Entlang dieser Linie ist die Ausnutzung C=P/n des Generators am höchsten. Die Leistung pro Drehzahl ist auf der Tangentenlinie T also maximal.

Aus der Druckschrift "Bosch; Elektrische Motorausrüstung von G. Henneberger; Vieweg-Verlag", Seite 55 ist bekannt, daß Generatoren bei Betrieb mit freier Spannung (freier Generatorbetrieb) höhere Abgabeleistungen bei entsprechendem Abschlußwiderstand erbringen, als im geregelten Betrieb auf eine konstante 14V-Ausgangsspannung. Ein freier Generatorbetrieb ist jedoch nicht ohne weiteres möglich, da dabei Generatorausgangsspannungen entstehen könnten, die die Bordnetzverbraucher erheblich beeinträchtigen könnten.

Aus der EP 0 593 299 A2 sind Verfahren zur Regelung eines Generators bekannt, bei denen die Ausgangsspannung des Generators mit Hilfe eines herkömmlichen Spannungsreglers geregelt wird. Der Spannungsregler beeinflusst dabei den Feldstrom in üblicher Weise zur Erreichung einer konstanten Ausgangsspannung des Generators. Die Ausgangsspannung des Generators wird zusätzlich mit Hilfe eines Gleichspannungswandlers auf Werte verringert, die zur Versorgung der herkömmliche Verbraucher eines Fahrzeugbordnetzes benötigt werden. Verbraucher, die eine höhere Spannung benötigen, werden direkt vom Generator versorgt. Ein ungeregelter Generatorbetrieb erfolgt in einem oberen Drehzahlbereich bei hoher Leistungsanforderung.

Aus der US-PS 4, 604,528 ist ein Zweispannungsbordnetz bekannt, bei dem ein Hochspannungs-Spannungsregler die Ausgangsspannung eines Generators regelt. Dabei wird die Ausgangsspannung auf Werte geregelt, die zur Versorgung von Hochspannungslasten geeignet sind. Die Versorgung der herkömmlichen Bordnetzverbraucher erfolgt mit Hilfe eines Niederspannungs-Spannungsreglers, der mit dem Ausgang des Generators in Verbindung steht. Aus der DE 4141 837 A und der EP-A-0 462 503 sind Generatorsysteme bekannt, bei denen normalerweise eine klassische Regelung auf konstante Ausgangsspannung, unabhängig von der Generatordrehzahl durchgeführt wird. Es werden aber auch Hinweise auf einen Betrieb mit freier, von der Generatordrehzahl abhängiger, gegebenenfalls auch erhöhter Spannung erwähnt, wobei dieser Betrieb nur kurzzeitig erfolgen soll oder durch geeignete Mittel zur Begrenzung des Erregerstroms abgesichert werden muss.

### Vorteile der Erfindung

Das erfindungsgemäße Verfahren zur Regelung eines Generators mit den Merkmalen des Anspruchs 1 hat den Vorteil, daß der Leistungsbereich des Generators besser ausgenutzt wird.

Erzielt werden diese Vorteile, indem der Erregerstrom des Generators in einem unteren Generatordrehzahlbereich nicht geregelt wird, so daß der Generator in freiem Betrieb arbeitet. Oberhalb einer vorgebbaren Drehzahl wird der Feldstrom geregelt, so daß sich keine unzulässig hohen Generatorspannungen ergeben.

Weitere Vorteile der Erfindung werden durch die in den Unteransprüchen aufgezeigten Maßnahmen erzielt. Besonders vorteilhaft ist dabei, daß die Drehzahl, ab der die Regelung der Erregerspannung durchgeführt wird, eine Drehzahl ist, bei der die Generatorspannung etwa der Bordnetzspannung entspricht. Dadurch ist sichergestellt, daß eine Regelung des Feldstromes beginnt, bevor unerlaubt hohe Generatorspannungen möglich werden. Da beim freien Generatorbetrieb bei kleinen Drehzahlen ein Betrieb entlang der Tangentenlinie möglich ist, läßt sich eine maximale Steigerungsrate der Leistung in Abhängigkeit von der zur Verfügung stehenden Generatordrehzahl erzielen. Durch den Einsatz von Gleichspannungswandlern, die die Ausgangsspannung des Generators auf Bordnetzspannung wandeln, ist eine Anpassung des Generators an vorgebbare Bedingungen möglich.

### Zeichnung

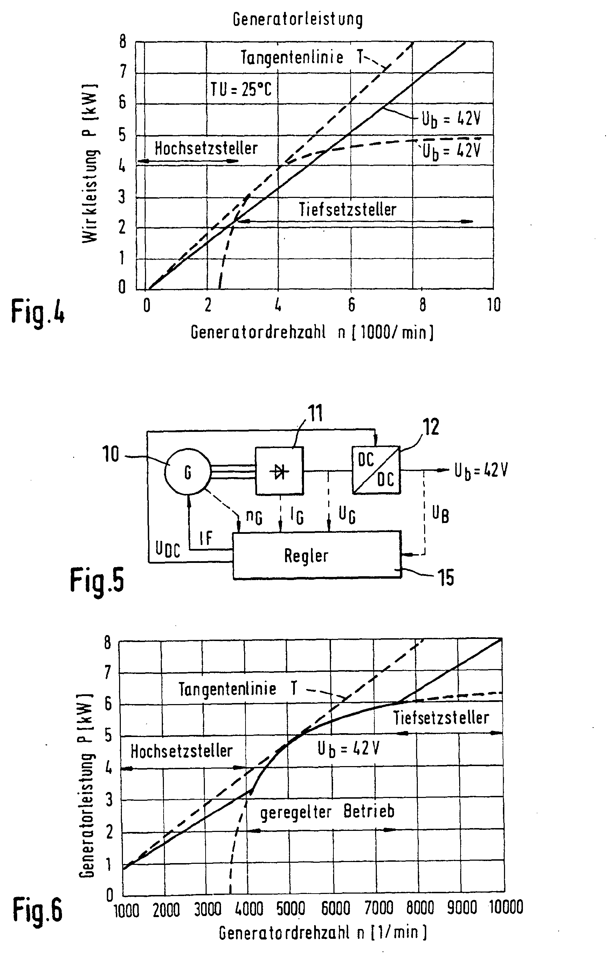

Die Erfindung ist in der Zeichnung dargestellt und wird in der nachfolgenden Beschreibung näher erläutert. Im einzelnen zeigt Figur 1 wie-bereits erwähnt, den Zusammenhang zwischen der Wirkleistung P und der Generatordrehzahl n für verschiedene Bordnetzspannungen Ub, Figur 2 zeigt den Zusammenhang zwischen Generatorleistung P und Generatordrehzahl n im ungeregelten Betrieb (unterhalb von 4000 1/min) und im geregelten Generatorbetrieb oberhalb von 4000 1/min. In Figur 3 ist Blockschaltbild eines erfindungsgemäßen Generatorsystems dargestellt. Figur 5 zeigt ein Beispiel eines anderen Generatorsystems. In den Figuren 4, 6, 7, 8 und 9 ist jeweils die Wirkleistung P über der Generatordrehzahl n für die verschiedenen Generatorbetriebsarten aufgetragen.

### Beschreibung

In Figur 1 ist der bekannte Zusammenhang zwischen der Wirkungsleistung P des Generators und der Generatordrehzahl n für verschiedene Bordnetzspannungen Ub für einen Klauenpolgenerator mit der Generatorspannung UGN=14V aufgetragen. Weiterhin ist die Tangentenlinie T dargestellt, wobei die Tangentenlinie idealerweise eine möglichst steile Ursprungsgerade ist, die die Generatorkennlinie P(n) im Tangentenpunkt TP berührt. Entlang der Tangentenlinie ist die Ausnutzung C=P/n des Generators am höchsten.

Damit die von einem Wechselstromgenerator, beispielsweise einem Klauenpolgenerator abgegebene Wirkleistung erhöht werden kann, werden die im folgenden anhand der Figuren 2 bis 9 beschriebenen Maßnahmen getroffen. Insbesonders wird der Generator im Anlaufbereich bzw. im unteren Drehzahlbereich im "freien" Generatorbetrieb betrieben. Nach Erreichen der Bordnetzspannung Ub, beispielsweise einer 42V-Bordnetzspannung, erfolgt der Übergang in den geregelten Betrieb. Im geregelten Betrieb wird der Erregerstrom des Generators von der Regeleinrichtung so beeinflußt, daß die Ausgangsspannung des Generators konstant 42V beträgt, unabhängig von der Generatordrehzahl. Im "freien" Generatorbetriebsbereich, also in einem Bereich, in dem die Generatorspannung drehzahlbedingt kleiner als die Bordnetz- bzw. Batteriespannung ist, speist bei den Beispielen nach Figur 3 und 5 ein Gleichspannungswandler (DC/DC-Wandler), das 42V-Bordnetz. Ein solcher Spannungswandler wird auch als Hochsetzsteller bezeichnet. Im geregelten Generatorbetrieb ist der DC/DC-Wandler nicht in Betrieb.

In Figur 3 ist ein Blockschaltbild einer Schaltungsumsetzung für eine erste Generatorbetriebsart einschließlich der DC/DC-Wandlerankopplung dargestellt. Der Generator ist dabei mit 10 bezeichnet, an den Generator schließt sich die Gleichrichterbrücke 11 an, deren Ausgang über einen Schalter 12 mit dem DC/DC-Wandler 13 verbunden werden kann. Am Ausgang des DC/DC-Wandlers 13 entsteht die Spannung Ub. Sie beträgt beispielsweise 42V. Der DC/DC-Wandler 13 ist über einen Schalter 14 sowie eine zugehörige Leitung überbrückbar. Der Schalter 12 und der Schalter 14 werden vom Regler 15 in geeigneter Weise betätigt. Der Regler 15 liefert den Feldstrom IF der nicht dargestellten Feldwicklung des Generators 10. Weiterhin liefert der Regler 15 eine Spannung UDC, die dem DC/DC-Wandler 13 zugeführt wird. Als Eingangsgrößen werden dem Regler 15 die Generatordrehzahl nG, der Generatorstrom IG, die Generatorspannung UG sowie die Bordnetzspannung Ub zugeführt. Mit Hilfe des Reglers 15 wird die erste erfindungsgemäße Generatorbetriebsart realisiert, die zu dem in Figur 2 dargestellten Zusammenhang zwischen Generatorleistung P und Generatordrehzahl n führt. Der Regler 15 liefert dazu den Feldstrom IF zur Feldwicklung des Generators und eine Sollspannung UDC an den DC/DC-Wandler 13.

Mit der in Figur 3 dargestellten Anordnung läßt sich eine Generatorbetriebsart realisieren, die eine höhere Ausnutzung des Leistungsbereichs von vorhandenen bzw. leicht modifizierten (Umwicklung) Serienklauenpolgeneratoren ermöglicht. Damit kann der steigende Leistungsbedarf zukünftiger Fahrzeuge gedeckt werden und die gegebenenfalls geforderte höhere Generatorspannung für zukünftige Kraftfahrzeug-Energiebordnetze kann bereitgestellt werden. Wird als DC/DC-Wandler ein Hochsetzsteller eingesetzt, kann auch im niedrigen Drehzahlbereich des Generators Leistung entnommen werden, die bei einem konstant geregelten 42V-Generator erst bei viel höheren Generatordrehzahlen möglich wäre. Wie Figur 1 zu entnehmen ist, kann bei einem herkömmlichen PKW-Generator bei Ub=42V unterhalb von 2500 Umdrehungen pro Minute praktisch keine Leistung entnommen werden. Wird dagegen die Ausgangsspannung des Generators UG mit Hilfe eines DC/DC-Wandlers, der als Hochsetzsteller arbeitet, erhöht, kann bereits bei einer Generatordrehzahl von 1000 Umdrehungen eine Generatorleistung von nahezu 1kW entnommen werden, bei 2300 Umdrehungen ergeben sich bereits annähernd 2kW (vgl. Figur 2).

Damit die in Figur 2 als durchgezogene Linie angegebene Generatorleistung P in Abhängigkeit von der Generatordrehzahl n für Ub=42V erhalten werden kann, wird bei Generatordrehzahlen von weniger als 4000 Umdrehungen pro Minute der Schalter 12 geschlossen und der Schalter 14 geöffnet. Damit wird der Hochsetzsteller 13 in Betrieb genommen. Die Ansteuerungen für die Schalter 12 und 14 werden vom Regler abgegeben, sobald dieser erkennt, daß die Generatordrehzahl n unterhalb von 4000 Umdrehungen pro Minute liegt. Es kann dann eine Generatorleistung entnommen werden, die nur wenig unterhalb der durch die Tangentenlinie definierten Generatorleistung liegt. Die Tangentengerade wird nicht erreicht, da der Hochsetzsteller nur etwa einen Wirkungsgrad von beispielsweise 85% hat. Erreicht der Generator die Drehzahl von 4000 Umdrehungen pro Minute, gibt der Regler 15 Ansteuerimpulse, die den Schalter 12 öffnen und den Schalter 14 schließen, so daß der DC/DC-Wandler 13 überbrückt wird. Es erfolgt dann ein Übergang in den geregelten Generatorbetrieb, bei dem der Feldstrom des Generators in üblicher Weise geregelt wird. Die Generatorleistung steigt dabei drehzahlabhängig an.

Bei einer solchen Betriebsart, bei der der DC/DC-Wandler nur zeitweise in Betrieb genommen wird, beispielsweise bei Leerlauf, im Anfahrbereich und in einem niedrigen Drehzahlbereich, kann der System Wirkungsgrad gegenüber einer Systemkonfiguration mit permanent eingebundenem DC/DC-Wandler erhöht werden. Durch den begrenzten Leistungsbereich, den der DC/DC-Wandler gegenüber Systemen mit permanent eingebundenen DC/DC-Wandlern abdecken muß, ergeben sich geringere Systemkosten.

In Figur 4 ist die Generatorleistung bzw. Wirkleistung P als Funktion der Drehzahl bei 42V Bordnetzspannung und Einsatz eines speziellen DC/DC-Wandlers im freien Generatorbetrieb aufgetragen. Figur 5 zeigt das zugehörige Blockschaltbild der Generatorbetriebsart und der DC/DC-Wandlerankopplung. Die in Figur 5 dargestellten Größen entsprechen den bereits in Zusammenhang mit Figur 3 erläuterten Größen. Die Schalter 12 und 14 nach Figur 3 sind nicht mehr vorhanden. Der Regler 15 führt die Spannung UDC dem Eingang des DC/DC-Wandlers 12 zu, dem auch die variable Ausgangsspannung des Generators zugeführt wird.

Damit die Abgabeleistung des Wechselstromgenerators 10, der beispielsweise als Klauenpolgenerator ausgestaltet ist, gesteigert wird, wird dieser im freien, also ungeregelten Generatorbetrieb betrieben. In diesem ungeregelten Betrieb steigt die Ausgangsleistung des Generators mit der Generatordrehzahl n linear an. In Figur 4 ist die Leistungskennlinie als durchgezogene Kennlinie für Ub=42V eingetragen. Damit bei einem solchen freien Generatorbetrieb die dem Bordnetz zur Verfügung zu stellende Spannung drehzahlunabhängig konstante Werte von 42V aufweist, muß der DC/DC-Wandler 12 so beschaltet sein, daß er als Hoch- oder als Tiefsetzsteller arbeiten kann. Dieser Spannungswandler wandelt die seinem Eingang zugeführte variable Eingangsspannung auf die konstante Bordnetzspannung von 42V. Beträgt die gelieferte, am Eingang des DC/DC-Wandlers 12 anstehende Spannung weniger als 42V, muß der Spannungswandler als Hochsetzsteller arbeiten. Beträgt die Spannung mehr als 42V, muß der DC/DC-Wandler als Tiefsetzsteller arbeiten.

Die zur Verfügung stehende maximale Generatorleistung wird durch die in Figur 1 als Tangentenlinie T bezeichnete Gerade bestimmt. Diese Abgabeleistung kann zwar in der Praxis nicht erreicht werden, da der DC/DC-Wandler einen Wandlerwirkungsgrad von beispielsweise 85% aufweist. Dadurch wird die in Figur 4 als durchgezogene Linie eingetragene Leistungskurve erhalten, die bei Drehzahlen unterhalb von etwa 2800 Umdrehungen pro Minute und oberhalb von etwa 5100 Umdrehungen pro Minute oberhalb von der der herkömmlichen Leistungskennlinie für einen PKW-Generator mit Ub=42V liegt. Auch diese Generatorbetriebsart kann bei herkömmlichen bzw. leicht modifizierten Serienklauenpolgeneratoren zum Einsatz kommen. Durch den Einsatz eines DC/DC-Wandlers als Hoch- bzw. Tiefsetzsteller kann über nahezu den gesamten Drehzahlbereich des Generators Leistung entnommen werden, die bei einem konstant geregelten 42V-Generator erst bei höheren Generatordrehzahlen möglich wäre. Der bei dieser Betriebsart immer in Betrieb befindliche DC/DC-Wandler in Verbindung mit dem im gesamten Drehzahlbereich ungeregelten Generator kann im oberen Drehzahlbereich sehr hohe Generatorleistungen abgeben, beispielsweise für Systeme, die große Leistungen im oberen Drehzahlbereich benötigen.

Eine andere Generatorbetriebsart, mit der die Abgabeleistung eines Wechselstromgenerators, beispielsweise eines Klauenpolgenerators gesteigert werden kann, besteht darin, im Anlaufbereich, bzw. im unteren Drehzahlbereich den Generator im freien Generatorbetrieb zu betreiben. Ein nachgeschalteter DC/DC-Wandler, der als Hochsetzsteller arbeitet, speist in diesem Betriebsbereich das Bordnetz. Nach Erreichen der 42V-Bordnetzspannung erfolgt der Übergang in den geregelten Generatorbetrieb mit konstanter Ausgangsspannung von 42V. Dieser geregelte Betrieb erstreckt sich, wie Figur 6 zu entnehmen ist, zwischen etwa 4000 und 7500 Umdrehungen. Werden Spitzenleistungen im hohen Drehzahlbereich benötigt, beispielsweise für die elektrische Ventilsteuerung (EVS), wird der Generator wiederum mit Hilfe des Spannungsreglers 15 in freien Generatorbetrieb umgeschaltet, wobei durch geeignetes Öffnen bzw. Schließen der Schalter 12, 14 der Schaltungsanordnung nach Figur 3 eine solche Umschaltung erfolgen kann.

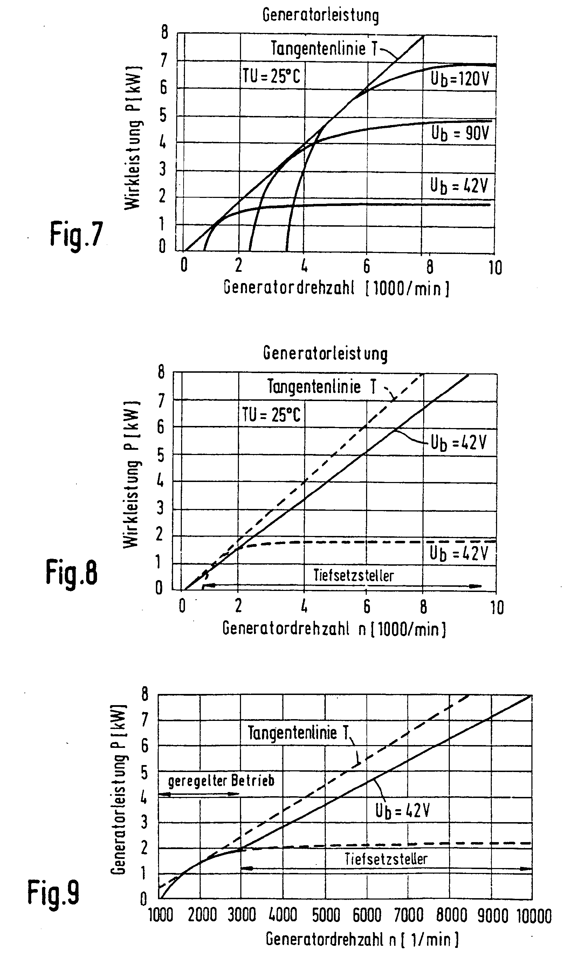

In einem anderen Beispiel ist ein System dargestellt, mit dem die Abgabeleistung eines Klauenpolgenerators ebenfalls gesteigert werden kann. Dabei wird der Klauenpolgenerator in einer anderen Wicklungsart betrieben. Eine solche umgewickelte 42v-version eines Klauenpolgenerators wird im freien Generatorbetrieb betrieben. Da die Ausgangsspannung des Generators in üblichen Drehzahlbereichen bereits höher liegt als 42V, wird der nachgeschaltete DC/DC-Wandler als Tiefsetzsteller aufgebaut, der die ihm zugeführte variable Eingangsspannung auf die konstante·Bordnetzspannung von 42V wandelt. In Figur 7 ist die Generatorleistung eines umgewickelten Klauenpolgenerators mit UGN=42V (Generatorspannung) über der Generatordrehzahl bei unterschiedlichen Ausgangsspannungen aufgetragen. Die maximale Abgabeleistung in Abhängigkeit von der Generatordrehzahl verläuft wie bei herkömmlichen Generatoren entlang der Tangentenlinie T. Entlang dieser Linie ist die Ausnützung C=P/n des Generators am höchsten. Beim freien Generatorbetrieb entlang der Tangentenlinie ändert sich die Ausgangsspannung näherungsweise proportional zur Drehzahl. Der Generatorstrom bleibt näherungsweise konstant. Damit die mögliche Abgabeleistung für die 42V-Bordnetzspannung erhalten wird, wird oberhalb von etwa 1000 1/min mit einem Tiefsetzsteller gearbeitet. In Figur 8 ist die mögliche Generatorleistung für Ub=42V als durchgezogene Linie dargestellt. Die Tangentenlinie T liegt nur wenig oberhalb der Leistungskennlinie. Der Unterschied wird durch den Wandlerwirkungsgrad von beispielsweise 85% verursacht. Verglichen mit der gestrichelt eingetragenen Generatorkennlinie für geregelten Betrieb ist zu erkennen, daß oberhalb von 2000 Umdrehungen pro Minute erheblich mehr Wirkleistung zur Verfügung steht. Die zugehörige Schaltungsumsetzung entspricht der Schaltung nach Figur 5.

In einer weiteren Generatorbetriebsart, mit der die Abgabeleistung eines Wechselstromgenerators, beispielsweise eines Klauenpolgenerators gesteigert werden / kann, wird dieser in einer umgewickelten 42V-Version betrieben. Die erzielbare Wirkleistung über der Generatordrehzahl entspricht der in Figur 9 dargestellten. Im Anlaufbereich bzw. im unteren Drehzahlbereich wird im geregelten Generatorbetrieb gearbeitet und eine 42V-Bordnetzspannung erzeugt. Werden Spitzenleistungen im hohen Drehzahlbereich benötigt, beispielsweise bei der elektrischen Ventilsteuerung EVS, erfolgt eine vom Regler 15 betätigte Umschaltung in den freien Generatorbetrieb. In diesem Arbeitsbereich speist der nachgeschaltete DC/DC-Wandler, der als Tiefsetzsteller beschaltet ist, das Bordnetz. Das Blockschaltbild der zugehörigen Schaltungsumsetzung entspricht dem Blockschaltbild nach Figur 3.

Die mögliche Abgabeleistung für diese Generatorbetriebsart ist in Figur 9 dargestellt. Die durchgezeichnete Linie zeigt wiederum die zur Verfügung stehende Generatorleistung. Im geregelten Betrieb bis etwa 3000 Umdrehungen pro Minute wird eine Leistung bereitgestellt, die der in Figur 7 aufgezeigten Leistung für geregelten Betrieb bei Ub=42V entspricht. Oberhalb von 3000 Umdrehungen pro Minute steigt die zur Verfügung stehende Leistung rasch an, da der Generator im "freien" Betrieb arbeitet. Sie unterscheidet sich von der in der Tangentenlinie aufgetragenen Maximalleistung durch die Leistung, die in Folge des Wandlerwirkungsgrades von beispielsweise 85% verloren geht. Der DC/DC-Wandler ist bei dieser Generatorbetriebsart nur zeitweise, nämlich zum Erhalt der Spitzenleistungen im hohen Drehzahlbereich in Betrieb. Der Systemwirkungsgrad ist gegenüber Systemkonfigurationen mit permanent eingebundenen DC/DC-Wandlern höher.

Das Ausführungsbeispiel der Erfindung wurden für Bordnetzspannungen von 42V beispielhaft beschrieben. Grundsätzlich lassen sich die beschriebenen Betriebsarten für beliebige Bordnetzspannungen realisieren.

## Patentansprüche

1. Verfahren zur Regelung eines Generators (10) , insbesondere eines von einer Brennkraftmaschine antreibbaren Drehstromgenerators mit einer Feldspule, durch die ein mittels eines Reglers (15) regelbarer Feldstrom (IF) fließt, zur Erzeugung des Erregerfeldes und mit Statorspulen, in denen durch Flußänderungen Wechselspannungen induziert werden, die Ströme erzeugen, die über Gleichrichter (11) zu Verbrauchern geleitet werden wobei der Regler (15) den Feldstrom (IF) der Feldwicklung des Generators zuführt, wobei in einem geregelten Betrieb der Feldstrom (IF) auf eine konstante Ausgangsspannung des Generators unabhängig von der Generatordrehzahl geregelt wird, **dadurch gekennzeichnet, dass** der Feldstrom (IF) in einem unteren Generatordrehzahlbereich ungeregelt bleibt, so dass der Generator dann in freiem Betrieb arbeitet und eine von der Drehzahl abhängige Spannung abgibt, ein Spannungswandler (13), insbesondere ein Hochsetzsteller die dann vom Generator gelieferte freie Spannung auf einen vorgebbaren Wert, insbesondere eine Bordnetzspannung (Ub) wandelt, und der Generatordrehzahlbereich für den freien Generatorbetrieb durch eine obere Drehzahl begrenzt wird, die der Drehzahl entspricht, bei der die Generatorspannung der Bordnetzspannung entspricht.

2. Verfahren zur Regelung eines Generators nach Anspruch 1, **dadurch gekennzeichnet, dass** der Übergang von freiem Generatorbetrieb mit ungeregeltem Feldstrom in geregelten Generatorbetrieb vom Regler veranlasst wird, wobei dem Regler die für die Auswahl der Betriebsart erforderlichen Betriebsparameter zugeführt werden und der Regler die erforderlichen Ansteuersignale abgibt.

3. Verfahren zur Regelung eines Generators nach einem der vorhergehenden Ansprüche, **dadurch gekennzeichnet, dass** die Regelung wirkungsgradoptimiert durchgeführt wird.

4. Verfahren zur Regelung eines Generators nach einem der vorhergehenden Ansprüche, **dadurch gekennzeichnet, dass** während des Generatorbetriebs mit geregeltem Feldstrom der Spannungswandler, insbesondere Hochsetzsteller überbrückt wird.

## Claims

1. Method for regulating a generator (10), in particular a three-phase generator which can be driven by an internal combustion engine, having a field coil through which a field current (IF) which can be regulated by a regulator (15) flows, for generating the excitation field and having stator coils in which AC voltages are induced by changes in flux, these AC voltages generating currents which are passed to loads via rectifiers (11), with the regulator (15) feeding the field current (IF) to the field winding of the generator, with the field current (IF) being regulated at a constant output voltage of the generator, irrespective of the rotation speed of the generator, during regulated operation, **characterized in that** the field current (IF) remains unregulated in a lower rotation speed range of the generator, and therefore the generator then operates freely and outputs a voltage which is dependent on the rotation speed, a voltage converter (13), in particular a step-up controller, converts the free voltage then supplied by the generator to a predefinable value, in particular an on-board electrical system voltage (Ub), and the rotation speed range of the generator for free generator operation is limited by an upper rotation speed which corresponds to the rotation speed at which the generator voltage corresponds to the on-board electrical system voltage.

2. Method for regulating a generator according to Claim 1, **characterized in that** the transition from free generator operation with an unregulated field current to regulated generator operation is initiated by the regulator, with the operating parameters required for selecting the manner of operation being fed to the regulator and the regulator outputting the required activation signals.

3. Method for regulating a generator according to either of the preceding claims, **characterized in that** the regulation is carried out in a manner so as to optimize efficiency.

4. Method for regulating a generator according to one of the preceding claims, **characterized in that** the voltage converter, in particular step-up converter, is bridged during generator operation with a regulated field current.

## Revendications

1. Procédé de régulation d'un générateur (10) et en particulier d'un générateur à courant tournant entraîné par un moteur à combustion interne et doté
d'un bobinage de champ dans lequel s'écoule un courant de champ (IF) régulé au moyen d'un régulateur (15) pour produire le champ d'excitation et
de bobinages de stator dans lesquels des tensions alternatives sont induites par des modifications de flux et produisent des courants qui sont amenés à des consommateurs par l'intermédiaire d'un redresseur (11),
le régulateur (15) amenant le courant de champ (IF) à l'enroulement de champ du générateur,
en mode de régulation, le courant de champ (IF) étant régulé à une tension de sortie constante du générateur indépendante de la vitesse de rotation du générateur,
**caractérisé en ce que**
le courant de champ (IF) reste non régulé dans une plage de basses vitesses de rotation du générateur de telle sorte que le générateur travaille alors en mode libre et délivre une tension qui dépend de la vitesse de rotation,
**en ce qu'**un convertisseur de tension (13), en particulier un rehausseur de tension, convertit la tension libre délivrée par le générateur à une valeur prédéterminée, en particulier la tension (Ub) du réseau de bord, et
**en ce que** la plage de vitesses de rotation du générateur en mode de fonctionnement libre du générateur est limitée par une vitesse de rotation haute qui correspond à la vitesse de rotation à laquelle la tension du générateur correspond à la tension du réseau de bord.

2. Procédé de régulation d'un générateur selon la revendication 1, **caractérisé en ce que** la transition entre le mode de fonctionnement libre du générateur à courant de champ non régulé au mode de fonctionnement régulé du générateur est activé par le régulateur, les paramètres de fonctionnement nécessaires pour la sélection du mode de fonctionnement étant amenés au régulateur et le régulateur délivrant les signaux de commande nécessaires.

3. Procédé de régulation d'un générateur selon l'une des revendications précédentes, **caractérisé en ce que** la régulation est réalisée de manière à optimiser le rendement.

4. Procédé de régulation d'un générateur, **caractérisé en ce que** lorsque le générateur fonctionne avec un courant de champ régulé, le convertisseur de tension et en particulier le rehausseur de tension sont contournés.
